# EUROPEAN PATENT APPLICATION

(11) **EP 0 680 010 A2**
(43) Date of publication of application: **02.11.1995**
(21) Application number: 95302737.2
(22) Date of filing: 24.04.1995
(51) Int. Cl.: G06K 15/00

(54) **Communications link module**

(30) Priority: 25.04.1994 GB 9408180
(71) Applicant: ESSELTE DYMO N.V., B-2700 St. Niklaas (BE)
(72) Inventor: Hastings, Nicholas James, Cottenham, Cambridge CB4 4UL (GB); Thompson-Bell, Ian, Royston, Hertfordshire SG8 0RB (GB)
(74) Representative: Driver, Virginia Rozanne

(57) **Abstract**

A link module for a label printer is disclosed operating according to a protocol particularly suitable for label printers. The link module has an input for receiving message packets from a controller, each mesage packet including a message identifier, and an output for transmitting response packets to the controller. The link module operates according to a protocol in which the incoming message is read to determine the message identifier and a response packet is formulated which includes the message identifier and an acknowledgement sequence. The message packets define two groups including a group of command packets and a group of request packets, the message identifier distinguishing the two groups.

## Description

This invention relates to a communications link module, particularly suited for implementing communications between a controller and a printing device.

Printing devices of the type with which the present invention is concerned include devices of the type known as label printers. Such printing devices are described for example in EP-A-0322918 (Brother Kogyo Kabushiki Kaisha) and EP-A-0267890 (Varitronics, Inc.). They operate with a supply of tape arranged to receive an image and a means for transferring an image onto the tape. The printing device has a keyboard for entering data generally in the form of characters to be transferred onto the tape and a display for displaying the data input via the keyboard. The printing device has a microprocessor for receiving the data input from the keyboard and for controlling the display to display the input data nd also to control printing means for transferring the image onto the tape. The microprocessor is also responsible for controlling feeding of the tape as it is printed and, optionally, cutting of the tape to form labels.

Printing devices of this type are intended to be small and light so that they are portable and have been found to be extremely useful and convenient for printing labels in any type of environment. One aspect of the printing device affecting its portability and also its price is the capacity of the microprocessor in the printing device. Users are now requiring quite sophisticated functions of printing devices of this type while nevertheless still requiring them to remain portable and inexpensive.

Reference is made to our European Application Publication No. 0580321 (Page White & Farrer Ref. 73567) which describes a printing device which has an interface connected to the microprocessor and which enables the operation of the printing device to be supplemented by allowing external cartridges to be connected via the interface to the microprocessor. The interface is connected to the microprocessor by an address bus, a data bus and a control bus and has an address connection port, a data connection port and a control connection port adapted for respective corresponding ports of the external cartridge. The interface also has a serial communications port connected to a serial communications port of the microprocessor to permit serial communications with an external personal computer or terminal. This allows a suitable external cartridge to provide the necessary support for communication between the printing device and a personal computer (PC).

The present invention is concerned with providing a link module for supporting communication between the printing device and a PC. The link module can be incorporated in such an external cartridge as discussed above or in a printing device itself.

According to the present invention there is provided a link module having: an input for receiving message packets from an external controller connected to the link module, the message packets each including a message identifier; an output for transmitting response packets to the external controller; and means for controlling a processor to read an incoming message to determine the message identifier, formulate a response packet including said message identifier and an acknowledgement sequence and transmit the response packet via the output to the external controller.

The input and output can be separate ports or can be implemented as a common bidirectional port.

In hardware terms, the port could be either serial or parallel (bus) based.

The link module is particularly suited for communication between an external controller and a printing device having its own processor. The link module could be integrated within a label printer. Alternatively it may be implemented in an external cartridge for connection to an interface of a label printer described above and disclosed in our copending European Patent Application No. 0580321. This allows labels to be composed on a personal computer, downloaded to the processor of the label printer and printed using the label printer.

The invention also provides a method of providing communications between a printing device having a processing means and an external controller, comprising: decoding a message identifier of an incoming message packet from the controller to determine whether it is a command packet or a request packet; formulating a response packet including the message identifier, an acknowledgement sequence and status data if requested.

For a better understanding of the present invention and to show how the same may be carried into effect, reference will now be made by way of example to the accompanying drawings, in which:-
Figure 1 is a block diagram showing the functional blocks of a printing device;
Figure 2 is a sketch of an external cartridge;
Figure 3A is a block diagram of a printing device connected to a personal computer;
Figure 3B is a block diagram of an external cartridge:
Figure 4 shows the general format of a message packet; and
Figures 5a to 5p show the formats of specific message packets and response packets.

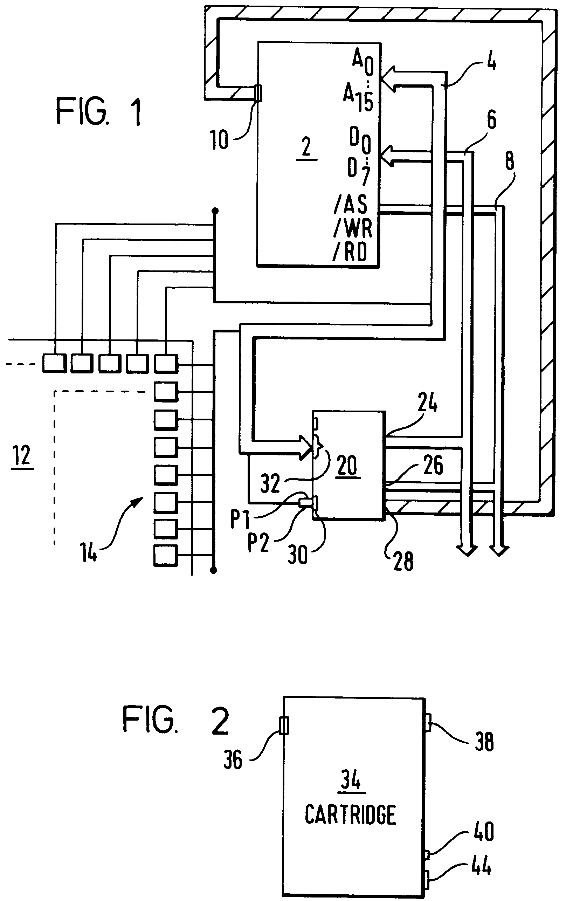

Referring firstly to Figure 1, a printing device comprises a central processor chip 2 which is for example an H8/325 device comprising a microprocessor and memory capacity made up of 32K of ROM and 1K of RAM. The processing capability of the processor is such that it can access up to 64K of memory. The processor device 2 has connection pins A₀ to A₁₅ for supplying signals to and from a 16-bit address bus 4 connected to the processor device 2. The processor device also has data pins D₀ to D₇ for supplying data to and from an 8-bit data bus 6 connected to the processor device. The processor device further has control lines /AS, /WR and /RD which are connected to a control bus 8. It further has a serial communications port 10 which can permit serial communications up to 19200 baud according to computer standards.

The printing device also has input means in the form of a keyboard 12 having a plurality of keys designated generally by a block 14. The keyboard 12 is coupled to supply signals to the address bus. Depression of the keys on the keyboard causes signals to be supplied onto the address bus 4 by means of which signals are supplied to the processor. The processor decodes the control signals from the keyboard 14 to produce addresses to access memory locations so as to supply data and control signals to control operations of the printing device in accordance with the functions selected by the user. With the present invention, the keyboard can be omitted and its function replaced by a keyboard of an external PC using the communications protocol described later.

The printing device also has an interface 20. The interface 20 is connected to the processor device 2 via its address bus 4, data bus 6 and control bus 8. The interface 20 is also connected to the processor device via the serial communications port 10. For external connections, the interface provides an address connection port 32 connected to the address bus 4, a data connection port 24 connected to the data bus 6, a control connection port 26 connected to the control bus 8, a serial communications connection port 28 and a functions connection port 30.

The processor device is also connected via its buses 4,6,8 to a display driver to control a liquid crystal display, to a stepper motor for controlling feeding of the tape which is being printed, a print head for controlling the image to be printed onto the tape, a power supply unit and a cutting mechanism. These are not shown because they do not form part of the present invention and in any event are described in our copending European Patent Application No. 93304435.6 (Page White & Farrer Ref. 73543), the contents of which are incorporated by reference. The display could be omitted and replaced by the display on an external PC.

The printing device is used in association with an external cartridge designated by reference numeral 34 in Figure 2 which has connection ports corresponding to the connection ports on the interface. That is the external cartridge has an address connection port 36, a data connection port 38 and a control connection port 40. The external cartridge 34 also has a serial communications port 44 which can be connected to the serial communication port 28 of the interface 20 and which allows a serial communications link 48 to a PC.

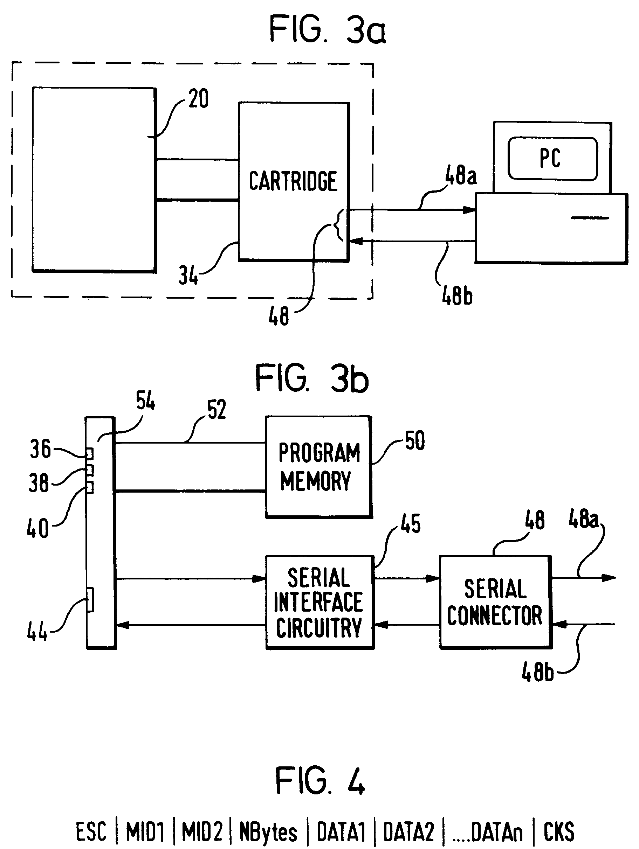

As shown in Figure 3A, the external cartridge 34 is connected to the interface 20 by the relevant connection ports 24,26,28,32 which are denoted by a common thick black line in Figure 3A. An external computer PC is connected to the serial communications port 44 of the cartridge. The serial communications link comprises two unidirectional lines, one outgoing (48a) and one incoming (48b). The communications link would be implemented as a parallel (bus) link.

Figure 3B is a block diagram of the cartridge 34. The external cartridge 34 includes support software in a ROM 50 for implementing a communications protocol to communicate with a device such as the PC connected to the serial communications link 48. The support software in the ROM is executed by the processor 2 of the label printer. The ROM 50 is connected to the address and data buses 52 of an interface connector 54. The interface connector provides the address port 36, data connection port 38, control connection port 40 and serial communications port 44 for connection to the interface 20. The interface 34 includes serial interface circuits 45 which connects the serial communications port 44 to the serial link 48. Thus, a host computer (PC) connected to the serial link 48 can take over entire control of the printing device.

The invention provides a protocol developed particularly for use with label printer products to allow a PC to control the label printer. The protocol is implemented by the ROM 50 which controls the processor 2 of the printing device via the address and data buses 52 of the cartridge connected to the address and data buses 4,6 of the printing device.

There are two main functions of the protocol:
1. To transmit commands and status information between the PC and the label printer.
2. To efficiently transfer bit-mapped image data from the PC to the label printer. Data compression is performed on the data to minimize the quantity of data to be transmitted to the label printer.

The communication protocol implemented between the PC and cartridge 34 should be considered as a master-slave arrangement, with the PC as the master. The PC therefore initiates all exchanges.

In all exchanges (with two exceptions, discussed below), the PC starts the dialogue by sending a message to the cartridge. The cartridge responds by providing a response echoing the message, appending any necessary data, together with an acknowledgement to show the message has been received. Each message is identified by a message identifier taking the form of two characters which indicate the action to be taken by the cartridge.

All messages fall into one of two categories:
i) Commands - The PC issues commands to cause an action to be initiated by the cartridge, such as cut tape, print bitmapped data and advance tape.
   The cartridge responds to a command message by echoing the message identifier and appending an acknowledgement byte to indicate if an error occurred in transmission of the message. The acknowledgement byte also informs the PC if the cartridge is able to receive another message.
ii) Requests - The PC issues requests when it wishes to determine the status of the label printer. The PC will need to know information such as the tape size, whether a cassette is present, if the battery is low, etc.
   The cartridge responds to a request message by echoing the message identifier with an acknowledgement byte together with the additional status information requested.

Occasions will arise when the cartridge is unable to receive any more messages. This will normally occur when compressed print data is being transmitted. To inform the PC that no more messages can be sent, the cartridge sets a flag (changes a bit) in the acknowledgement byte. When the cartridge is able to receive more data it will issue a "continue" message. The PC may then send the next message.

All messages and their responses are encoded into a packet structure, consisting of a maximum of 128 bytes. The generic form of the packet is shown in Figure 4 for which the following table explains the abbreviations.
- ESC: A fixed identifier (ASCII character 27)
- MID1): Message identifier bytes. Indicate the
- MID2): type of message. (ASCII characters)
- NBytes: The total number of data bytes in the packet including checksum.
- DATA1): Data associated with the command.
- DATAn):
- CKS: The checksum for the preceding data bytes.

This encoding allows a flexible and expandable protocol to be defined. The message identifier bytes (MID1,MID2) are encoded as ASCII alphanumeric codes. The meaning of these identifiers and their corresponding actions is detailed below.

The checksum is calculated as a byte by byte XOR of the preceding message bytes, including ESC and the message identifiers.

### MESSAGE DEFINITIONS

### Acknowledge Byte (Ackbyte)

Ackbyte is used in all responses to commands and requests. Akcbyte indicates if an error has occurred, or if the PC must wait before sending another message. The Ackbyte is also sent with the ERROR message to indicate the type of error. The format of the Ackbyte is as follows:
- Ackbyte:: Bit0 Checksum error
Bit1 Unknown command
Bit2 Incorrect data
Bit3 Timeout error occurred
Bit4 Wait
Bit5 Serial communications error
Bit6 Printer fault

The bits indicate the following errors:
- Bit0: Checksum error. Set when an input packet checksum error is detected.
- Bit1: Unknown Command. The packet "ESC" character is not received when expected. Invalid MID1/MID2 character or character combination.
- Bit2: Incorrect data.
- Bit3: Timeout error. Input reception timeout occurs within a data packet. Timeout set to 1 second.
- Bit4: Wait. Unable to accept any further commands/requests. The "Continue" message is output when inputs may be resumed.
- Bit5: Serial communications error. Examples: - framing or overrun reception errors are detected on the serial communications input.
- Bit6: Printer fault. Examples: - cutter jammed, no tape/lid opened.

### Request - Identify Cartridge Present

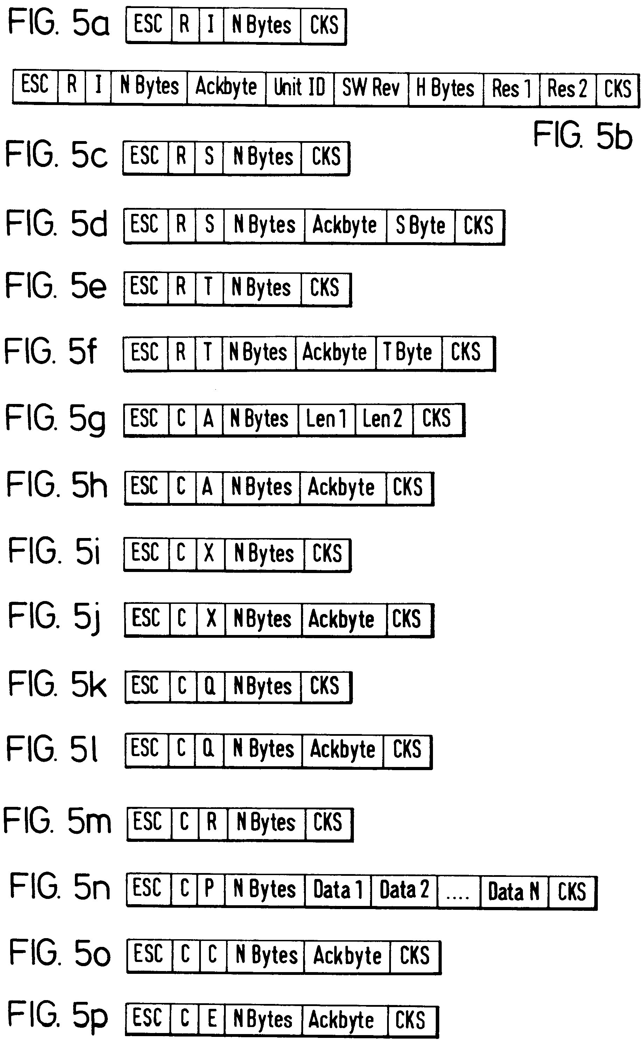

- IDENT: To identify the label printer to the PC, with its software revision number and printhead information, the PC sends an IDENT request which is shown in Figure 5a, where R is a message identifier denoting a request and I is a message identifier denoting IDENT. The response of the cartridge is shown in Figure 5b where:
Unit ID = Type of Unit (1 for cartridge)
SWRev = Software revision number
HBytes = No of bytes for head
Res 1,2 = Printhead resolution (dots/mm*10)

### Request - Status

- STATUS: To inform the PC of the state of battery, cutter mechanism, tape present, etc, the PC sends a STATUS request which is shown in Figure 5c where S is a message identifier denoting STATUS. The response of the cartridge is shown in Figure 5d where:
- SByte:: Bit0 Battery low
Bit1 Cutter jammed
Bit2 No tape/lid open
Bit3 Message still being actioned
Bit4 Scissor cut engaged

### Request - Tape Size

- TAPE SIZE: To identify size of tape, the PC sends a request to the cartridge as shown in Figure 5e where T denotes TAPE SIZE. The response of the cartridge is shown in Figure 5f where:
- TByte:: 0 - 6mm tape
1 - 12mm tape
2 - 19mm tape

### Command - Advance Tape

- ADVANCE: To advance the tape by a specified distance, the PC sends a command in the form shown in Figure 5g where A is a message identifier denoting ADVANCE, and Len1,2 = length of tape advance (in 1/8th of millimetre).
The response of the cartridge is merely an acknowledgement echoing the message identifier T as shown in Figure 5h.

### Command - Cut Tape

- CUT: To cut tape at current position, the PC sends a command in the form shown in Figure 5i, where X denotes CUT. The acknowledgement is shown in Figure 5j.

### Command - Abort

- ABORT: To stop all printing immediately, the PC sends a command in the form shown in Figure 5k where Q denotes ABORT. The acknowledgement is shown in figure 5l.

### Command - Reset All

- RESET ALL: To reset the cartridge to its initial state and to cause printing to be stopped immediately and the printhead buffers to be flushed, the PC sends a command message as shown in Figure 5m where R denotes RESET. The form of acknowledgement is as shown in Figure 5l but with R replacing Q.

### Command - Print Data

- PRINT DATA: To download bitmapped data from the PC to the cartridge, the PC sends a command message as shown in figure 5n, where NBytes = the number of data bytes in the entire packet (Max = 128). The response is as shown in Figure 5l, but with P replacing Q.

The cartridge can issue two messages which are not subject to the "master/slave" principle and which are issued in a format equivalent to acknowledgement to a command message from the PC.

### SW Handshake - Continue

- CONTINUE: To inform the PC that it is OK to send data, after a previously issued "WAIT" (setting a bit in Ackbyte), the cartridge issues a message as shown in Figure 5o.

### Error Message

- ERROR: To inform the PC that an error has occurred, which is not detailed in Ackbyte, a message can be issued by the cartridge asynchronously, in the form shown in Figure 5p.

With the command PRINT DATA, the data to be printed by the label printer is transmitted from the PC as part of the message packet sent from the PC. The message packet is acknowledged as described advice by the cartridge and the data is transmitted to the processor 2 where it is decoded and then downloaded into the printhead buffers. Processing of the data by the processor 2 of the label printer is carried out under the external of the software in the ROM 50 of the cartridge. The processor 2 formats the data so it can be loaded into the printhead buffers.

The data is sent from the PC in compressed (encoded) format. Compression techniques are discussed in more detail in our European Patent Application No. 93304435.6 entitled COMPRESSED FONT (Page White & Farrer Ref. 73543), the contents of which are herein incorporated by reference. The following briefly summarises the way in which various data compression formats are encoded for transmission.

The technique primarily uses "run length encoding" methods. There are four basic formats:
Continuous black or white - "solid fill"
Repeated patterns
Copy data "as - is"
Set the length of the pattern repeat.

These formats are coded as follows:
1. SOLID FILL
   Up to 127 bytes of continuous black or white can be encoded in a single byte.
   - Bit7: set to 1 for black fill
   set to 0 for white fill
   - Bits 0-6: contain the number of solid fill bytes
2. REPEATED PATTERNS
   The format is:
   00 / RL / DATA1 / DATA2 / ...DATAn /
   Where RL is the number of times to repeat the pattern. DATA1, etc. are the bytes which make up the pattern.
   - Note -: The length of the pattern (i.e. the number of data bytes, n, in this format) is set by format 4 below.
   - A value of zero for RL is an error.
3. COPY DATA "AS - IS"
   The format is:
   80 / RL / DATA1 / DATA2 / ...DATAn /
   Where RL is the number of data bytes that follow
   DATA1, etc. are the data to be printed "as - is".
   - Note -: A value of zero for RL is an error.
4. SET PATTERN REPEAT LENGTH
   The format is:
   00 / 00 / RPT
   Where RPT is a single bytes which is subsequently used as the pattern repeat length in format 2.
   - Note -: A value of zero for RPT is an error.

## Claims

1. A link module having:
an input for receiving message packets from a controller connected to the link module, the message packets each including a message identifier;
an output for transmitting response packets to the controller; and
means for controlling a processor to read an incoming message to determine the message identifier, formulate a response packet including said message identifier and an acknowledgement sequence and transmit the response packet via the output to the controller.

2. A link module according to claim 1 wherein the message packets from the controller define two groups, a group of command packets in which the message identifier is followed by command data and a group of request packets in which the message identifier is followed by request data, the message identifier distinguishing the two groups.

3. A link module according to claim 2 wherein the processing means is operative in response to a command packet to formulate a response packet including only the message identifier and the acknowledgement sequence and in response to a request packet to formulate a response packet including a message identifier, the acknowledgement sequence and status data requested by the controller.

4. A link module according to claim 2 or 3 when incorporated in a label printing device having printing means for printing label information onto a tape, driving means for moving tape past the printing means and cutting means for cutting off a portion of the tape to form a label.

5. A link module according to claim 4 in which the command packets from the controller include the following:
(i) an advance command for controlling the driving means;
(ii) a cut command for controlling the cutting means;
(iii) a print command for controlling the printing means.

6. A link module according to any preceding claim wherein the processing means has a flag storage location where a flag is set when the module cannot receive any further message packets, the acknowledgement sequence being altered when the flag is set.

7. A link module according to any preceding claim wherein the message packets and response packets have a maximum predetermined length and each having the format of a fixed identifier followed by a message identifier followed by a checking sequence followed by data and/or the acknowledgement sequence depending on the type of packet.

8. A link module according to any preceding claim which takes the form of a cartridge adapted to be connected to an interface of a printing device.

9. A method of providing communication between a printing device having a processing means and an external controller, comprising:
decoding a message identifier of an incoming message packet from the controller to determine whether it is a command packet or a request packet;
formulating a response packet including the message identifier, an acknowledgement sequence and status data if requested.

10. A method according to claim 9 wherein the response packet is formulated in response to a command packet to include only the message identifer of the acknowledgement sequence and in response to a request packet to include the message identifier, the acknowledgement sequence and status data requested by the controller.

11. A method according to claim 9 or 10 wherein the command packets from the controller include the following:
i) an advance command for controlling the driving means;
ii) a cut command for controlling the cutting means;
iii) a print command for controlling the printing means.

12. A method according to claim 9, 10 or 11 wherein the acknowledgement sequence is altered when the printing device cannot receive any further message packets.
